# EUROPEAN PATENT APPLICATION

(11) **EP 2 134 011 A2**
(43) Date of publication of application: **16.12.2009**
(21) Application number: 09162403.1
(22) Date of filing: 10.06.2009
(51) Int. Cl.: H04B 10/158, G02B 6/34, H04L 27/22

(54) **Delay interferometer**

(30) Priority: 10.06.2008 JP 2008152241
(71) Applicant: Yokogawa Electric Corporation, Tokyo 180-8750 (JP)
(72) Inventor: Asano, Junichiro, Musashino-shi Tokyo 180-8750 (JP); Iemura, Koki, Musashino-shi Tokyo 180-8750 (JP); Hihara, Mamoru, Musashino-shi Tokyo 180-8750 (JP)
(74) Representative: Grünecker, Kinkeldey, Stockmair & Schwanhäusser Anwaltssozietät

(57) **Abstract**

In a delay interferometer in which a Michelson delay interferometer unit is mounted in a package having first and second sidewall portions that are perpendicular to each other, the delay interferometer includes: a Michelson delay interferometer unit in which first interference output light obtained by processing input light that is received through an input port disposed in the first sidewall portion is output through a first output port disposed in the first sidewall portion, and second interference output light is output from a second output port disposed in the second sidewall portion; and a first optical axis shifting member which shifts an optical axis position of the first interference output light in parallel to the first sidewall portion, to cause the light to be supplied into the first output port.

## Description

### TECHNICAL FIELD

The present disclosure relates to a delay interferometer using a spatial optical system, which is used for demodulating a differential phase shift keying signal in optical fiber communication, particularly in optical fiber communication using a dense wavelength division multiplexing (DWDM) system.

### RELATED ART

In optical fiber communication using a DWDM system, an optical signal which is modulated by the differential phase shift keying method (DPSK) or the differential quadrature phase shift keying method (DQPSK) is mainly transmitted, and a received optical signal is demodulated by a demodulator including a delay interferometer.

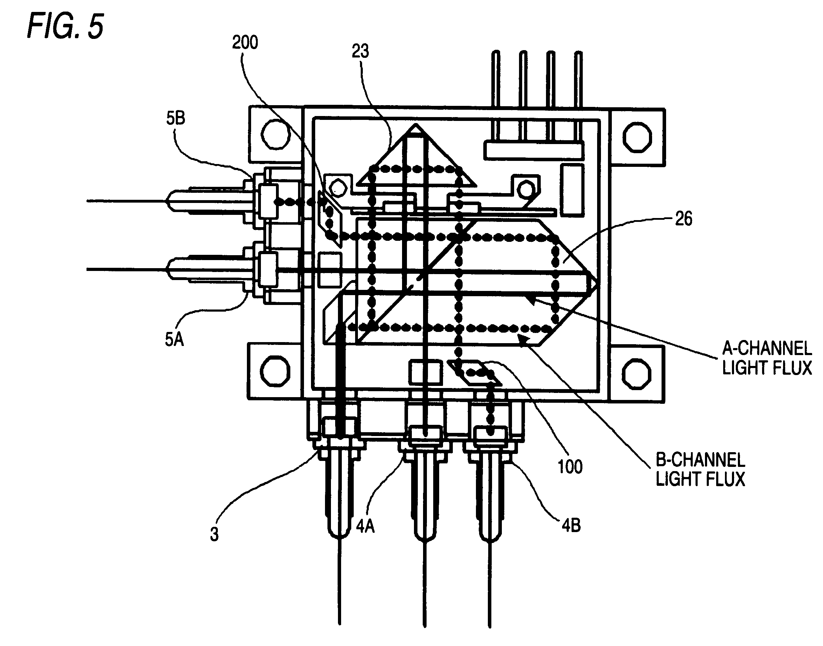

As a delay interferometer using a spatial optical system, a Michelson delay interferometer is well known. Fig. 5 is an optical diagram of a demodulator which is disclosed in Patent Reference 1, and which uses a Michelson delay interferometer.

A light beam S10 which is incident from incident means is split by a splitting portion 111 into two light beams S11, S12. The light beams S11, S12 are incident on the Michelson delay interferometer. Four interference outputs from the Michelson delay interferometer due to the input light beams S11, S12 are reflected by a mirror 116 or 117, and received by an optical detector 122 or 123 through a lens 118, 119, 120, or 121. These components constitute a demodulator for a DQPSK optical signal.

[Patent Reference 1] JP-A-2007-151026

In a lens used in an input/output port to which an optical fiber is to be connected, usually, a predetermined size which is required by optical characteristics is ensured. Therefore, miniaturization of such a lens is limited. In a delay interferometer having a package shape in which lenses in input/output ports are laterally juxtaposed, the lens interval (optical fiber interval) is increased because of a method of fixing the lenses or optical fibers, thereby causing a problem in that the sizes of internal components and a package become large.

A small delay interferometer is known in which a Michelson delay interferometer unit is mounted in a package having first and second sidewall portions that are perpendicular to each other, and an output port for one interference output light, and an output port for the other interference output light are perpendicularly distributed in the first and second sidewall portions, respectively.

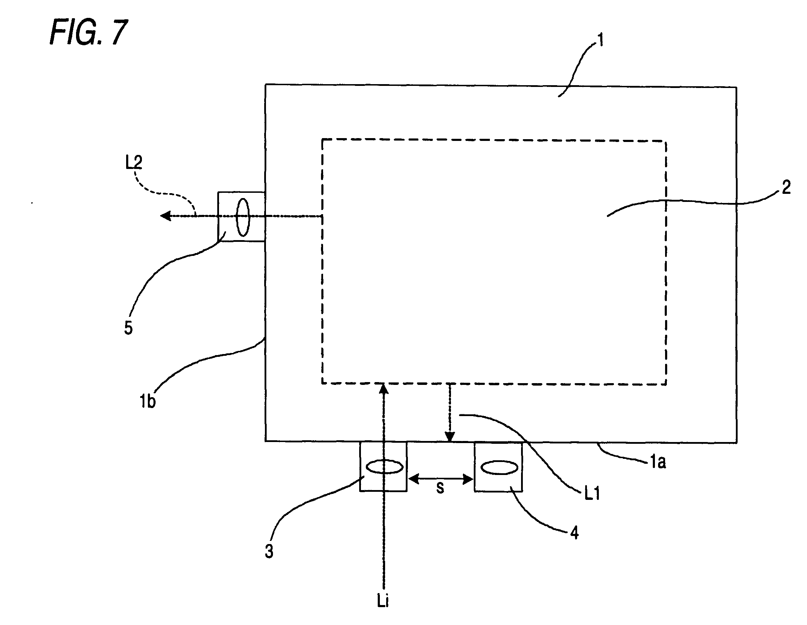

Fig. 7 is a plan view showing a configuration example of a related-art delay interferometer having perpendicular input/output ports. A Michelson delay interferometer unit 2 is mounted in a quadrilateral package 1 having first and second sidewall portions 1a, 1b that are perpendicular to each other.

Input light Li is input into the Michelson delay interferometer unit 2 through an input port 3 disposed in the first sidewall portion 1a. The Michelson delay interferometer unit 2 outputs first interference output light L1 which is obtained by processing the input light, from a first output port 4 disposed in the first sidewall portion 1a, and outputs second interference output light L2 from a second output port 5 disposed in the second sidewall portion 1b.

There is no problem in a design in which the second output port 5 disposed in the second sidewall portion 1b is placed so as to coincide with the optical axis position of the second interference output light L2. By contrast, there is a problem in a design of the juxtaposition of the input port 3 and first output port 4 which are disposed in the first sidewall portion 1a.

In the case where the two adjacent ports 3, 4 are juxtaposed in the same wall face, the ports cannot be placed while approaching each other within the minimum distance S, because of restrictions imposed by the lens size and standards for optical fibers. Even in the case where the components of the Michelson delay interferometer unit 2 are miniaturized, when the distance between the axis of the first interference output light L1 and the axis of the input light Li is shorter than the minimum distance S, therefore, the first interference output light L1 cannot be supplied to the first output port 4 as shown in the figure. Consequently, miniaturization of the components of the Michelson delay interferometer unit 2 has limitations.

### SUMMARY

Exemplary embodiments of the present invention provide a delay interferometer in which input/output ports can be placed without restrictions imposed on the distance between two adjacent ports, and a Michelson delay interferometer unit mounted in the delay interferometer can be easily miniaturized.

The invention is configured in the following manners.

### (1) A delay interferometer comprises:

a package including first and second sidewall portions which are perpendicular to each other, an input port disposed in the first sidewall portion, through which an input light is received, a first output port disposed in the first sidewall portion, which outputs a first interference output light, and a second output port disposed in the second sidewall portion, which outputs a second interference output light;
a Michelson delay interferometer unit, which is mounted in the package and processes the input light to form the first interference output light and the second interference output light; and
a first optical axis shifting member which shifts an optical axis position of the first interference output light in parallel to the first sidewall portion, to cause the light to be supplied into the first output port.

(2) In the delay interferometer of (1), the delay interferometer further includes a second optical axis shifting member which shifts an optical axis position of the second interference output light in parallel to the second sidewall portion, to cause the light to be supplied into the second output port.

### (3) A delay interferometer comprises:

a package including first and second sidewall portions which are perpendicular to each other, an input port disposed in the first sidewall portion, through which an input light is received, an A-channel first output port disposed in the first sidewall portion, an A-channel second output port disposed in the second sidewall portion, a B-channel first output port disposed in the first sidewall portion, and a B-channel second output port disposed in the second sidewall portion, the A-channel first output port and the A-channel second output port outputting an A-channel interference output light, the B-channel first output port and the B-channel second output port outputting a B-channel interference output light;
a Michelson delay interferometer unit, which is mounted in the package, and splits the input light into two or A and B channels and processes the slit lights to form the A-channel interference output light and the B-channel interference output light; and
a first optical axis shifting member which is placed nearby the first sidewall portion and shifts at least one of optical axis positions of the A-channel interference output light and the B-channel interference output light in parallel to the first sidewall portion, to cause the light to be supplied into the A-channel first output port or B-channel first output port disposed in the first sidewall portion.

(4) In the delay interferometer of (3), the delay interferometer further includes a second optical axis shifting member which is placed nearby the second sidewall portion and shifts at least one of optical axis positions of the A-channel interference output light and the B-channel interference output light in parallel to the second sidewall portion, to cause the light to be supplied into the A-channel second output port or B-channel second output port disposed in the second sidewall portion.

(5) In the delay interferometer of any one of (1) to (4), the first optical axis shifting member or/and the second optical axis shifting member are parallel prisms.

(6) In the delay interferometer of any one of (1) to (5), the Michelson delay interferometer unit includes a beam splitter and reflectors which are integrally structured by a same material.

Other features and advantages may be apparent from the following detailed description, the accompanying drawings and the claims.

### BRIEF DESCRIPTION OF THE DRAWINGS

Fig. 1 is a plan view showing an embodiment of a delay interferometer to which the invention is applied.
Fig. 2 is a plan view showing another embodiment of the invention.
Fig. 3 is a plan view showing in detail the configuration of the embodiment of Fig. 2.
Figs. 4A to 4C are plan views showing optical paths of A and B channels in the configuration of Fig. 3.
Fig. 5 is a plan view showing a further embodiment of the invention.
Fig. 6 is an optical diagram of a demodulator which is disclosed in Patent Reference 1.
Fig. 7 is a plan view showing a configuration example of a related-art delay interferometer.

### DETAILED DESCRIPTION

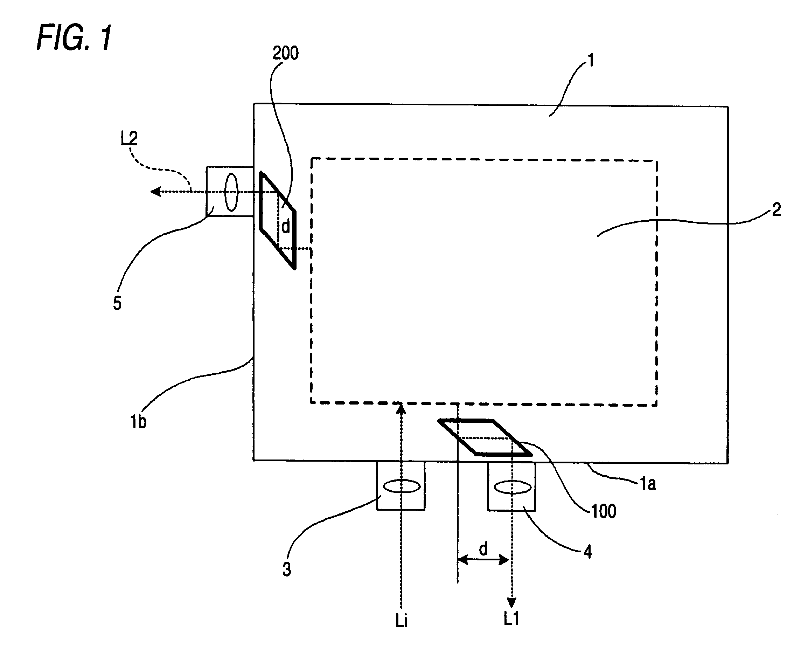

Hereinafter, the invention will be described in more detail with reference to the drawings. Fig. 1 is a plan view showing an embodiment of a delay interferometer to which the invention is applied. The same components as those of the related-art configuration which has been described with reference to Fig. 7 are denoted by the identical reference numerals, and their description is omitted.

A feature of the configuration of the invention which is added to that of Fig. 7 is that a first optical axis shifting member 100 disposed in the first sidewall portion 1a is used. The optical axis shifting member 100 is formed by a parallel prism, and can parallel shift interference output light by a predetermined distance. More specifically, the optical axis shifting member 100 receives the first interference output light L1, and shifts the optical axis position of the light by a distance d in parallel to the first sidewall portion 1a, to cause the first interference output light to be supplied into the first output port 4 disposed in the first sidewall portion 1a. Therefore, the mounting problem due to the distance between ports can be solved, and components constituting the Michelson delay interferometer unit, such as a beam splitter block and reflectors can be miniaturized. Consequently, the package size can be reduced. Further, the positions of the input/output ports can be freely determined, and hence the degree of freedom in design of the package can be enhanced.

A second optical axis shifting member 200 disposed in the second sidewall portion 1b receives the second interference output light L2, and shifts the optical axis position of the light by the distance d in parallel to the second sidewall portion 1b, to cause the second interference output light to be supplied into the second output port 5 disposed in the second sidewall portion 1b.

In the second sidewall portion 1b, there is no problem due to the distance between ports. Therefore, the insertion of the second optical axis shifting member 200 is not necessary. The insertion of the first optical axis shifting member 100 causes the optical path length of the first interference output light L1 to be elongated. Therefore, the second optical axis shifting member 200 is inserted in order to provide a compensating function of making the optical path length of the second interference output light L2 equal to the elongated optical path length.

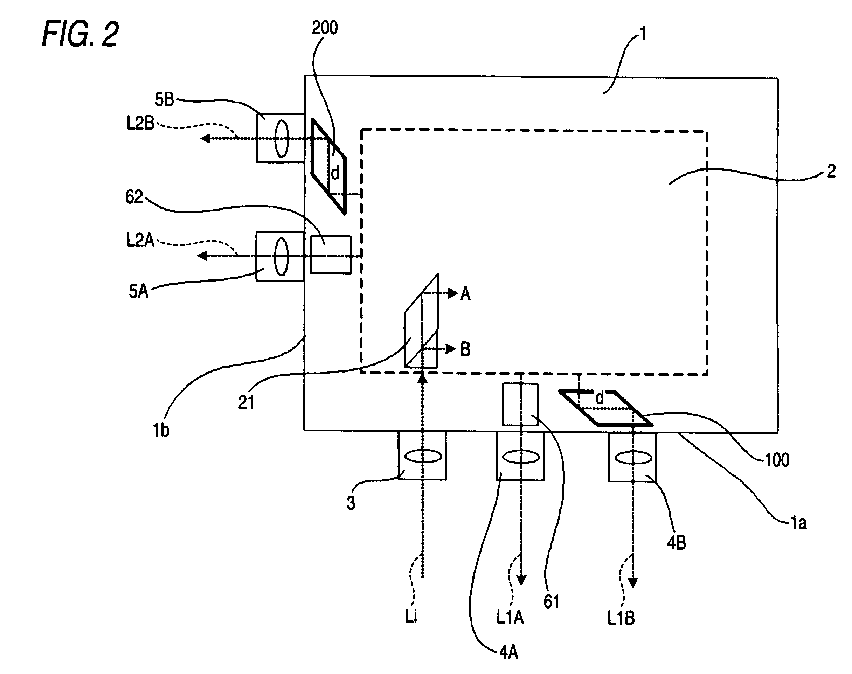

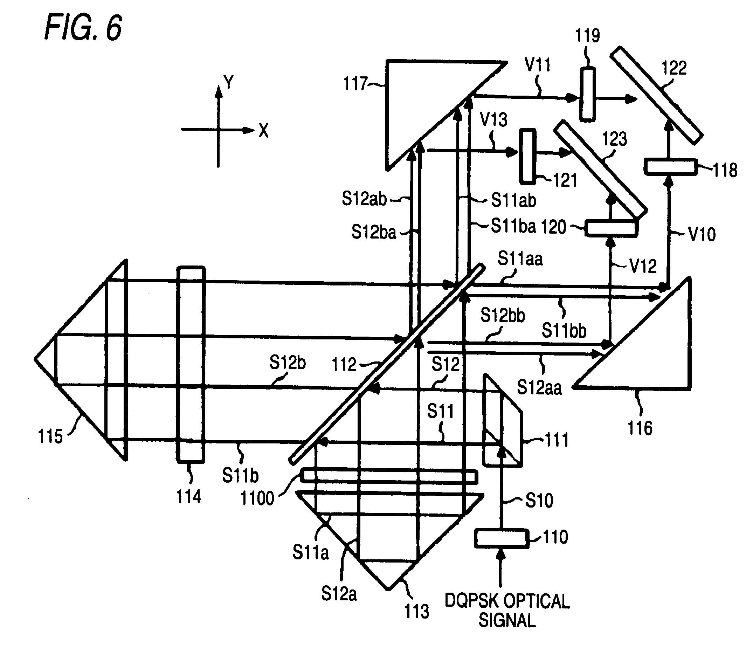

Fig. 2 is a plan view showing another embodiment of the invention. The embodiment operates on the same principle as the Michelson delay interferometer disclosed in Patent Reference 1 shown in Fig. 6. In the Michelson delay interferometer unit 2, the input light Li which is modulated by DQPSK is split into A and B channels by a splitting portion 21, and then optically processed. In each of the channels, the first interference output light and the second interference output light are output.

In the Michelson delay interferometer unit 2, the A-channel first interference output light L1A is output from an A-channel first output port 4A disposed in the first sidewall portion 1a, and the A-channel second interference output light L2A is output from an A-channel second output port 5A disposed in the second sidewall portion 1b.

Similarly, the B-channel first interference output light L1B is output from a B-channel first output port 4B disposed in the first sidewall portion 1a, and the B-channel second interference output light L2B is output from a B-channel second output port 5B disposed in the second sidewall portion 1b.

In the invention, the first optical axis shifting member 100 and the second optical axis shifting member 200 shift the optical axes of the B-channel first interference output light L1B and the B-channel second interference output light L2B, to cause the light to be supplied to the B-channel first output port 4B disposed in the first sidewall portion 1a, and the B-channel second output port 5B disposed in the second sidewall portion 1b, respectively.

In the embodiment, the first optical axis shifting member 100 and the second optical axis shifting member 200 shift the optical axis of the interference output light of the B channel. Alternatively, optical axis shifting members may be inserted into the A channel depending on the design of the ports of the package, or may be inserted into the both A and B channels.

In the embodiment, first and second optical path length compensating members 61, 62 each of which is formed by a rectangular prism are inserted into the optical paths of the A-channel first interference output light L1A and the A-channel second interference output light L2A in the package. The optical path length compensating members 61, 62 have a function of compensating the optical path difference between the A and B channels caused by the combination of the splitting portion 21 and the first optical axis shifting member 100 or the second optical axis shifting member 200.

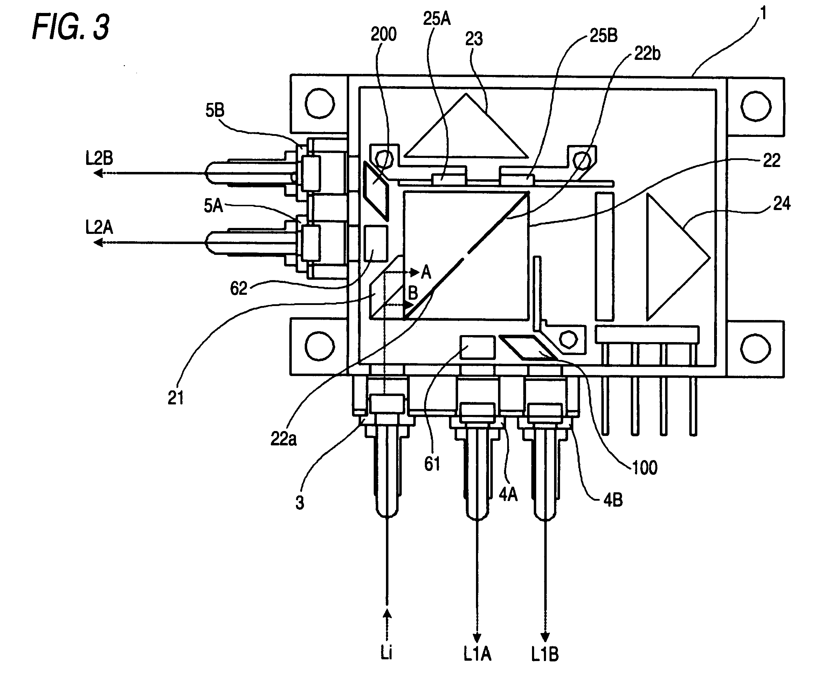

Fig.3 is a plan view showing in detail the configuration of the embodiment of Fig. 2. The Michelson delay interferometer unit 2 mounted in the package 1 includes: the beam splitter 22 which is joined to the splitting portion 21 to optically process A-channel input light and B-channel input light; the first reflector 23; the second reflector 24; an A-channel phase adjusting plate 25A; and a B-channel phase adjusting plate 25B.

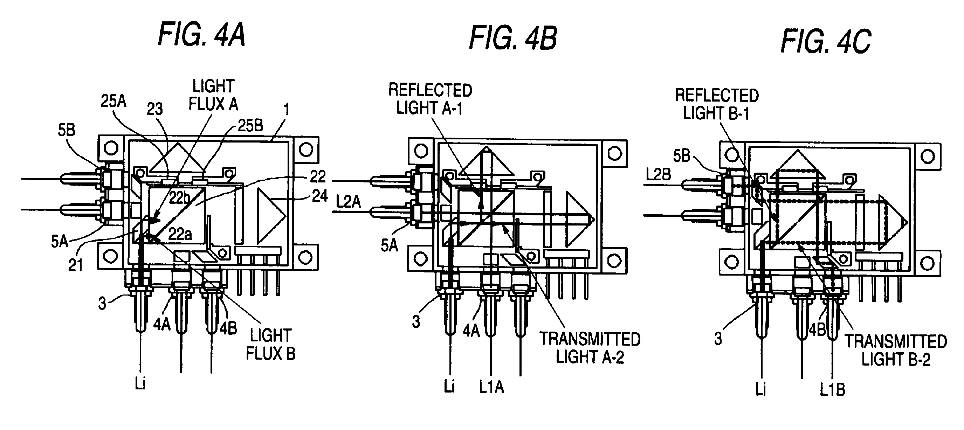

Figs. 4A to 4C are plan views showing optical paths of the A and B channels in the configuration of Fig. 3. Fig. 4A shows optical paths of the split of the A and B channels, Fig. 4B shows those of the A channel, and Fig. 4B shows those of the B channel, Hereinafter, the operation of the delay interferometer will be described with reference to Figs. 3 and 4.

The input light Li which is incident through the input port 3 is passed through a lens to be converted to substantially parallel light, and then incident on the splitting portion 21. The incident substantially parallel light flux is split into transmitted light and reflected light by an NPBS film of the splitting portion 21.

The light transmitted through the NPBS film is totally reflected by a total reflection surface to be formed as an A-channel light flux, and the light reflected by the NPBS film of the splitting portion 21 is formed as a B-channel light flux. As shown in Fig. Fig. 4A, the A-channel and B-channel light fluxes are incident on the beam splitter 22 including first and second NPBS films 22a, 22b.

As shown in Fig. 4B, the light flux A which is incident on the beam splitter 22 is split into reflected light A-1 and transmitted light A-2 by the first NPBS film 22a of the beam splitter 22. The reflected light A-1 is returned by the first reflector 23, the transmitted light A-2 is returned by the second reflector 24, and the both are then incident on the second NPBS film 22b of the beam splitter 22.

The transmitted light which is formed by causing the reflected light A-1 to be transmitted through the NPBS film 22b, and the reflected light which is formed by causing the transmitted light A-2 to be reflected by the NPBS film 22b are output as the A-channel first interference output light L1A to the A-channel first output port 4A. At this time, the A-channel first interference output light L1A is the output the Michelson delay interferometer which is determined by the positions of the first and second reflectors 23, 24, i.e., the optical path length difference between the reflected light A-1 and the transmitted light A-2.

Similarly, the reflected light which is formed by causing the reflected light A-1 to be reflected by the NPBS film 22b, and the transmitted light which is formed by causing the transmitted light A-2 to be transmitted through the NPBS film 22b are output as the A-channel second interference output light L2A to the A-channel second output port 5A.

Also with respect to the light flux B shown in Fig. 4C, similarly with the light flux A, the B-channel first interference output light L1B is output to the B-channel first output port 4B, and the B-channel second interference output light L2B is output to the B-channel second output port 5B.

As described with reference to Fig. 2, the A-channel first and second interference output light L1A, L2A are supplied to the respective output ports through the first and second optical path length compensating members 61, 62, and the B-channel first and second interference output light L1B, L2B are supplied to the respective output ports through the first and second optical axis shifting members 100, 200.

A thin-film heater is formed on the A-channel phase adjusting plate 25A which is inserted in the optical path of the reflected light A-1. When an electric power is supplied to the heater, the refractive index of the phase adjusting plate 25A is changed, and the optical path length is equivalently changed, whereby the interference spectrum of the A-channel interference output light can be adjusted. Similarly, the B-channel phase adjusting plate 25B inserted in the optical path of the reflected light B-1 can adjust the interference spectrum of the B-channel interference output light. More specifically, a thin-film heater is formed on the B-channel phase adjusting plate 25B, and when an electric power is supplied to the heater, the refractive index of the phase adjusting plate 25B is changed, and the optical path length is equivalently changed, whereby the interference spectrum of the B-channel interference output light can be adjusted.

Fig. 5 is a plan view showing another embodiment of the invention. The embodiment is **characterized in that** the functions of the beam splitter 22 and the second reflector 24 are integrally structured by the same material, to be configured as an integrated beam splitter 26.

In the integrated configuration, the optical path length therein can be equivalently shortened because the material has a high refractive index (for example, about 1.5), and therefore the package size can be further reduced. Also the beam splitter 22 and the first reflector 23 can be integrated with each other. When these components are integrated with each other, it is possible to realize a performance improvement in which the optical path length change due to the difference of the coefficients of thermal expansion is minimized.

## Claims

1. A delay interferometer comprising:
a package including first and second sidewall portions which are perpendicular to each other, an input port disposed in the first sidewall portion, through which an input light is received, a first output port disposed in the first sidewall portion, which outputs a first interference output light, and a second output port disposed in the second sidewall portion, which outputs a second interference output light;
a Michelson delay interferometer unit, which is mounted in the package and processes the input light to form the first interference output light and the second interference output light; and
a first optical axis shifting member which shifts an optical axis position of the first interference output light in parallel to the first sidewall portion, to cause the light to be supplied into the first output port.

2. A delay interferometer according to claim 1, further comprising:
a second optical axis shifting member which shifts an optical axis position of the second interference output light in parallel to the second sidewall portion, to cause the light to be supplied into the second output port.

3. A delay interferometer comprising:
a package including first and second sidewall portions which are perpendicular to each other, an input port disposed in the first sidewall portion, through which an input light is received, an A-channel first output port disposed in the first sidewall portion, an A-channel second output port disposed in the second sidewall portion, a B-channel first output port disposed in the first sidewall portion, and a B-channel second output port disposed in the second sidewall portion, the A-channel first output port and the A-channel second output port outputting an A-channel interference output light, the B-channel first output port and the B-channel second output port outputting a B-channel interference output light;
a Michelson delay interferometer unit, which is mounted in the package, and splits the input light into two or A and B channels and processes the slit lights to form the A-channel interference output light and the B-channel interference output light; and
a first optical axis shifting member which is placed nearby the first sidewall portion and shifts at least one of optical axis positions of the A-channel interference output light and the B-channel interference output light in parallel to the first sidewall portion, to cause the light to be supplied into the A-channel first output port or B-channel first output port disposed in the first sidewall portion.

4. A delay interferometer according to claim 3, further comprising:
a second optical axis shifting member which is placed nearby the second sidewall portion and shifts at least one of optical axis positions of the A-channel interference output light and the B-channel interference output light in parallel to the second sidewall portion, to cause the light to be supplied into the A-channel second output port or B-channel second output port disposed in the second sidewall portion.

5. A delay interferometer according to claim 1 or 3, wherein the first optical axis shifting member is a parallel prism.

6. A delay interferometer according to claim 2 or 4, wherein the first optical axis shifting member and the second optical axis shifting member are parallel prisms.

7. A delay interferometer according to any one of claims 1 to 6, wherein the Michelson delay interferometer unit includes a beam splitter and reflectors which are integrally structured by a same material.
